# FASCICULE DE BREVET EUROPEEN

(11) **EP 0 362 325 B1**
(45) Date de publication et mention de la délivrance du brevet: **09.03.1994**
(21) Numéro de dépôt: 89903076.1
(22) Date de dépôt: 17.03.1989
(51) Int. Cl.: C08F 8/00

(54) **RESINES CHELATANTES ET PROCEDE D'UTILISATION DANS L'EXTRACTION D'IONS METALLIQUES**
CHELATBILDENDE HARZE UND VERFAHREN ZUR VERWENDUNG ZUM EXTRAHIEREN VON METALLIONEN
CHELATING RESINS AND PROCESS FOR USING THEM IN THE EXTRACTION OF METALLIC IONS

(30) Priorité: 25.03.1988 CH 1135/88
(43) Date de publication de la demande: 11.04.1990
(73) Titulaire: METALFIX S.A., CH-2300 La Chaux-de-Fonds (CH)
(72) Inventeur: JENNERET-GRIS, Gilbert, CH-2022 Bevaix (CH)
(74) Mandataire: Fischer, Franz Joseph
(86) Numéro de dépôt international: CH8900055
(87) Numéro de publication internationale: WO8909238

(56) Documents cités:
- DE-A- 2 805 265
- DE-A- 3 528 884
- US-A- 4 230 828

## Description

La présente invention concerne la préparation de résines polymères hydrophiles fonctionnalisées par des ligands et leur utilisation dans l'extraction sélective d'ions métalliques dissous.

La récupération des ions métalliques (métaux lourds, métaux précieux, etc.) dans les effluents et dans les eaux résiduaires, naturelles ou industrielles, a vu son importance croître au cours des dernières années, aussi bien auprès des industries que des administrations chargées du contrôle de la qualité des eaux et de leur détoxification. Le recours aux résines chélatantes ou échangeuses d'ions constitue certainement une solution simple, efficace et peu onéreuse pour régler ce problème. De plus cette méthode permet en principe un recyclage facile ces sels des métaux récupérés.

De nombreuses résines ont été préparées. Elles peuvent être classées en deux groupes qui se recoupent parfois: les résines à large spectre d'action, "les chélatantes non-spécifiques", et les résines à action restreinte, "les chélatantes spécifiques". La plus populaire de toutes les résines jamais préparées est certainement celle dont le ligand est l'acide iminodiacétique, appelé aussi IDA (HN(CH₂COOH)₂), dont on connaît à l'heure actuelle pas moins de dix producteurs différents: Diamond Shamrock, Dow Chemicals, Bio Rad Laboratories, Mitsubishi, Reanal, Rohm et Haas, VEB Chemie, Permutit Co Ltd, Bayer, Unitaka. Pratiquement toutes ces résines sont à base de polystyrène-divinylbenzène, un polymère lipophile qu'il est nécessaire de rendre hydrophile soit par traitement spécial soit par l'introduction de groupes polaires. La résine proposée par la maison Unitaka est composée d'un polymère de type phénol-formaldéhyde rendu hydrophile grâce à un procédé breveté (Uejima et al.,US Pat.,4,250,031) et est commercialisée sous le nom générique d'Unicellex. La caractère hydrophile ou hydrophobe du squelette d'une résine fixe ses possibilités de solvatation ; une résine hydrophile réagira bien avec un solvant polaire comme l'eau et mal avec les solvants apolaires tels les solvants organiques (benzène, éthers, etc.). Un ion métallique dissous dans un solvant polaire sera donc préférablement extrait par une résine hydrophile. Du fait que presque toute la chimie des ions métalliques se déroule dans l'eau (hydrométallurgie, écochimie, électrochimie (par exemple galvanoplastie), agrochimie, etc) les résines hydrophiles sont par conséquent particulièrement intéressantes.

La plupart des résines chélatantes non-spécifiques sont surtout utilisées dans les cas où les mélanges d'ions métalliques à extraire ne sont pas trop complexes et où les propriétés des ions sont suffisamment différentes pour permettre leur séparation. Les résines à base d'IDA ne sont pas efficaces dans la détoxification des eaux naturelles calcaires ou dans la préconcentration des métaux présents en trace dans l'eau de mer parce que les concentrations en "ions gênants" (par exemple les alcalins ou les alcalino-terreux) sont trop importantes et empêchent une extraction efficace des ions métalliques. Pour certaines applications il faut donc posséder des résines chélatantes spécifiques ou semi-spécifiques. Dans l'épuration d'eaux naturelles il convient d'utiliser des résines susceptibles de reconnaître entre les ions toxiques (métaux lourds surtout) et les ions gênants mais non toxiques (alcalins-sodium, potassium-alcalinoterreux-calcium, aluminium, fer, etc.).

De plus il faut que la résine chélatante soit capable de former des chélates très stables avec les ions métalliques.

En effet les ions métalliques peuvent déjà se trouver fortement complexés en solution. La résine doit donc former une liaison plus forte avec l'ion métallique que le ligand. En galvanoplastie par exemple les additifs de type polyamine sont couramment utilisés pour favoriser l'électrodéposition des métaux sur les surfaces. Ces polyamines forment avec les ions métalliques des liaisons très stables. Si on veut récupérer les métaux par chélation avec une résine, il conviendra donc que celle-ci soit plus fortement chélatante que les additifs utilisés.

En général, plus un ligand possède un grand nombre d'atomes coordinateurs, plus la stabilité des complexes formés est grande. Dans le cas évoqué plus haut, une bonne solution consisterait à utiliser des résines chélatantes polyamines dont le nombre d'atomes d'azote serait supérieur à celui des polyamines utilisés dans les bains galvaniques. Dans ces conditions, l'ion métallique peut être quantitativement extrait.

Le but de la présente invention est de fournir un procédé amélioré de préparation de résines chélatantes hydrophiles à base de polyacrylamide modifié. La préparation de gels réticulés de polyacrylamide avec une amine est connue, par exemple par la réaction d'une monoamine primaire ou secondaire avec le chlorure d'acryle (par exemple Chemische Berichte, 110, 778 (1977), avec l'acrylamide (DE-A-1 250 491 (1960)) ou encore avec le formaldéhyde comme agent de couplage (FR-A-2 354 351).

On connait aussi la modification de gels réticulés de polyacrylamide avec des monoamines ou avec des acides aminés comme l'acide pyroglutamique (Kogyo Kagaku Zasshi, 73, 1250 (1970) ou, à l'aide d'un agent de couplage comme le formaldéhyde, avec des acides aminés FR-A-2 354 351 ou SU-A-895 980).

Par le document DE-A-3 528 884, on connaît un procédé de préparation de polyacrylamide substitué au diméthylaminométhyle faisant réagir une base de Mannich. La réaction s'effectue en solution aqueuse. Tout d'abord, on dissout le polyacrylamide pendant au moins 24 h, ensuite de quoi on le fait réagir avec de la diméthylamine et du formaldéhyde en quantité stoechiométrique en milieu basique avec un pH plus haut que 10. On obtient ainsi une acrylamine stable en hydrolyse, substituée aux groupes aminométhyle. Le produit est utile en tant que produit floculant dans le traitement des eaux usées.

Le document DE-A-2 805 265 décrit un procédé de préparation de composés de polyamidamine, dans lequel on fait réagir un polymérisat d'au moins 5 moles en % de monomères d'acrylamide et/ou de méthacrylamide avec du formaldéhyde et une amine secondaire, la réaction étant conduite en condition neutre ou basique en présence d'un dérivé d'acide contenant de l'azote, tel un amide ou imide, en tant que stabilisateur.

Le rapport molaire des groupes carbamoyle du polymérisat, de l'amine secondaire et du stabilisateur est délimité par une formule arithmétique. Le polymérisat ainsi préparé sert de floculant, spécialement pour des solutions et suspensions colloïdales aqueuses, que l'on trouve dans l'industrie du papier.

Dans les deux derniers documents cités on ne trouve aucune indication selon laquelle les polymères modifiés permettraient une isolation quantitative et sélective des ions de métaux lourds des eaux usées.

Le brevet US-A-4 230 828 décrit la modification de résines polystyréniques avec des ligands multidentaux.

Contrairement à la présente invention, la réaction de couplage a lieu en solvants organiques.

Il faut distinguer entre les réactions dans lesquelles l'azote de la fonction amine est échangé avec celui de la fonction amide de l'acrylamide ou du polyacrylamide et celles dans lesquelles un agent de couplage est utilisé pour réunir les fonctions amine et amide. Dans le premier cas, les propriétés chimiques de la fonction amine sont fondamentalement changées, notamment la constante d'acidité. La fonction amine perd sa nature alcaline et chélatante. L'amine perd sa capacité de chélater les ions métalliques. De telles réactions peuvent être obtenues aussi bien avec l'acrylamide qu'avec le polyacrylamide. Avec celui-ci on peut activer par exemple l'échange en introduisant successivement dans une suspension aqueuse de gel de polyacrylamide, de l'hydrate d'hydrazine puis du nitrite de sodium. La fonction amide (-CONH₂) est activée en fonction azoture (-CON₃) plus réactive.

Il est alors possible de remplacer le groupe azoture (-N₃) par un groupe amine (-NH₂) et obtenir de la sorte des gels de polyacrylamide réticulés modifiés par un acide aminé, par exemple la lysine H₂N(CH₂)₄CH(NH₂)COOH. L'atome d'azote utilisé pour la liaison avec le polymère perd sa nature basique et la lysine greffée doit être considéré comme un simple acide monoaminé.

La modification de résines de polyacrylamide réticulé à l'aide d'un agent de couplage a été limité aux molécules ne possédant qu'un atome d'azote réactif (monoamines, acides monoaminés). Si la molécule à greffer possède plusieurs atomes d'azote modifiables (par exemple les polyamines dérivées de l'éthylèneimine), l'agent de couplage peut réagir plusieurs fois avec la même molécule. Il s'ensuit qu'un tel molécule peut être fixée au polymère par plusieurs liaisons.

Il n'est pas sûr que ces liaisons se fassent sur le même fragment de la chaîne du polymère (liaisons vicinales). Si elles se créent effectivement à différents endroits de la chaîne du polymère, on assiste en général à une augmentation de la réticulation du polymère. La résine devient alors dure et cassante et perd son caractère hydrophile. Une des conséquences visibles est une diminution de la vitesse de diffusion des ions métalliques dans la résine. Le temps necessaire pour charger la résine augmente alors énormément et on ne peut plus l'utiliser à des fins chromatographiques.

On remarque aussi que le pouvoir chélatant diminue fortement.

En effet, puisque pour se lier par exemple à la polyamine l'ion métallique doit s'entourer simultanément de plusieurs atomes d'azotes, l'énergie nécessaire pour réaliser cette opération augmente fortement s'il faut en même temps plier plusieurs fragments du polymère. Ainsi une diminution de la mobilité du ligand greffé entraîne une baisse, souvent très importante, du pouvoir chélatant d'une résine.

L'objet de la présente invention est donc le procédé de préparation de résine chélatante selon la définition de la revendication 1. Des modes particuliers de réalisation de l'invention sont décrits dans les revendications 2-11. De préférence le procédé selon l'invention utilise le greffage de la polyamine avec un agent de couplage afin de conserver à la polyamine son caractère basique. Cependant, afin d'éviter la polyfonctionnalisation, un agent de compétition est ajouté à la solution de modification. Le rôle de l'agent de compétition est de limiter les possibilités de réaction entre le ligand et le polymère. L'agent de couplage doit pouvoir réagir aussi bien avec le ligand qu'avec l'agent de compétition. En revanche l'agent de compétition ne doit pas pouvoir réagir avec la résine, soit directement soit par l'intermédiaire de l'agent de couplage. Il est alors possible d'utiliser des concentrations telles en agent de couplage que le greffage du ligand sur le polyacrylamide soit quantitatif sans que pour autant elle se fixe par plusieurs atomes d'azote. Dans ces conditions le ligand conserve sa mobilité puisqu'il n'est fixé que par un de ses atomes d'azote et le polymère, son caractère de gel puisque son taux de réticulation n'est pas augmenté. Après réaction le surplus d'agent de couplage et d'agent de compétition sont filtrés et ainsi éloignés de la solution.

Les résines obtenues selon le procédé de la présente invention permettent d'extraire quantitativement les ions métalliques (surtout les métaux lourds et précieux) dans les eaux industrielles ou naturelles. Par comparaison les méthodes connues ne permettent pas de préparer des résines capables d'extraire les ions métalliques dans des solutions fortement concentrées en ions indifférents comme le sodium, le calcium, etc. En effet le pouvoir chélatant des résines à base d'acide aminé est fortement abaissé en présence de grandes concentrations de ces ions et il en résulte des capacités insuffisantes pour qu'on puisse exploiter industriellement ce type de résines.

La nature hydrophile de la résine permet de l'utiliser dans des condition extrêmes; par conditions extrêmes on entend des temps de contact très courts entre la solution dans laquelle les ions métalliques sont dissous et la résine elle-même. Elle peut être utilisée aussi bien dans des systèmes dynamiques (par exemple la chromatographie) que statiques (par exemple des lits de résine). De surcroit la grande stabilité chimique et mécanique de ces résines permet de les utiliser dans une large gamme de conditions. Par exemple elles résistent à l'hydrolyse dans un large domaine de pH, aux oxydants ou aux réducteurs, aux microorganismes, à de hautes températures et/ou pressions, etc.

Les résines préparées selon la présente invention peuvent être régénérées et réutilisées. La récupération et le recyclage des métaux fixés au polymère est aussi possible.

Les résines obtenues selon le procédé de la présente invention sont caractérisées par leur caractère hydrophile. Celui-ci est obtenu grâce à la présence d'unités hydrophiles de Formule I dans le squelette du polymère.

Les unités hydrophiles représentées dans la formule I 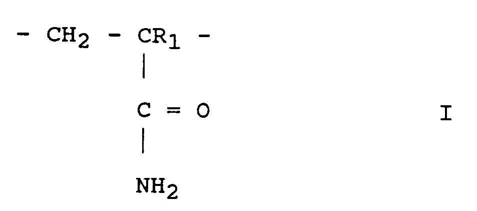
qui sont présentes dans les polymères de départ sont substituées au moins partiellement avec un ligand chélatant comme décrit dans la revendication 1. Les restes R₁ sont un hydrogène ou un reste aliphatique.

Par polymère hydrophile on entend un polymère qui se mouille bien et, en particulier, qui peut gonfler dans les solvants polaires tels que l'eau.

Le polymère de départ peut être constitué exclusivement d'unités de formule I substitué au moins partiellement mais peut également présenter entre des unités de formule I, des molécules ou des ponts de nature très diverse.

Typiquement on obtient par exemple des polymères de formule II. 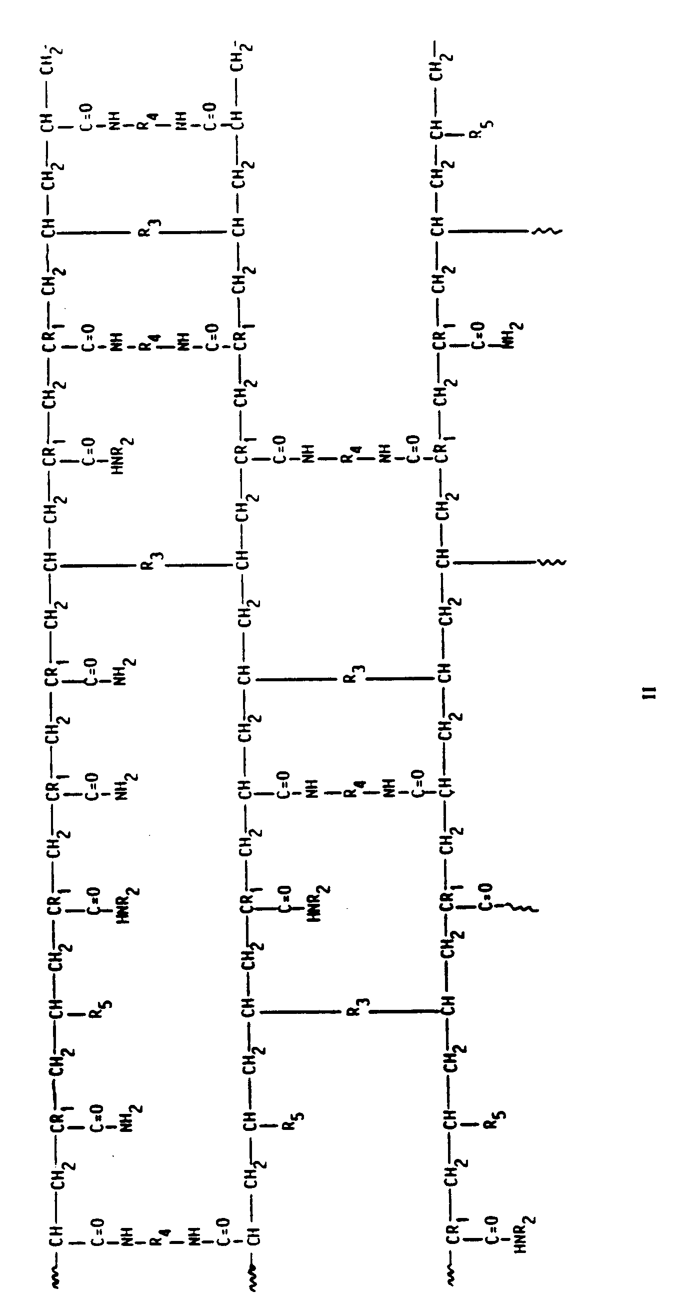
Le reste R₂ est un ligand chélatant du groupe comprenant un acide aminé, une polyamine, un aminoalcool, un aminothiol, un acide aminophosphonique ou sulfonique, un aminodithiocarbamate, une aminoamidoxim, un azamacrocycle et une aza-ether couronne et les restes R₃, R₄ et R₅ sont en général des groupes organiques ou inorganiques; ils peuvent être constitués par exemple par des unités alcanes (par exemple méthylène, éthylène, butylène, etc.), cycloalcanes, aryles (par exemple phényle, etc.), hétérocycliques (par exemple pyridyles, etc.). De préférence les restes R₃ et R₄ sont des unités alkylène, comme methylène ou arylène, comme phenylène. R₅ est de préférence l'hydrogène, un aryle, comme phényle, un hétérocycle comme pyridyle, pyrrolidinonyle ou imidazolyle.

Dans le cas où dans la formule II R₄ est un pont méthylène, la résine obtenue est de type gel de polyacrylamide réticulé.

Pour qu'une résine soit chélatante il faut qu'un ligand chélatant soit lié au polymère. Il est possible de fixer plusieurs ligands différents sur la même résine afin de lui donner plusieurs propriétés chélatantes spécifiques en même temps. Par chélation on entend la faculté d'un composé de former un composé stable (=chélate) avec un ion métallique. La nature de ce composé (=ligand) est très variable et dépend de la nature des ions métalliques à chélater. Typiquement ces ligands sont des molécules comprenant des chaînes ou des cycles carbonés, ramifiés ou linéaires, et renfermant des atomes susceptibles de former des liaisons avec les ions métalliques Ces atomes sont généralement des hétéroatomes comme l'azote, l'oxygène, le soufre, le phosphore, le bore, le sélénium, etc.. Les chaînes carbonées sont généralement composées de chaînons alkyles ou aryles et plus particulièrement de ponts éthylène, propylène, butylène, etc., phényle, pyridyle, salicyle, etc.. Les ponts éthylène, propylène, butylène, salicyle, phénol, méthoxyphénol, 2- ou 3-pyridyle, etc. sont généralement préférés aux autres. Les ponts eux-mêmes peuvent appartenir à des cycles aliphatiques ou aromatiques. Les ligands sont les acides aminés (par exemple la glycine, les acides iminodiacétique, éthylènediaminemono-, di- et triacétique, la proline, la valine, l'histidine, l'acide aspartique et tous les autres acides aminés etc.), les polyamines (par exemple l'éthylènediamine, la propylènediamine, le diaminobutane,etc, la diéthylènetriamine, la dipropylènetriamine, la triéthylènetétramine, la tétraéthylènepentamine, la pentaéthylènehexamine et les dérivés ramifiés de ces polyamines, etc.), les aminoalcools (par exemple l'amino-2 butanol, l'alaninol, le valinol, le prolinol, etc.), les aminothiols, les acides aminophosphoniques ou sulfoniques (par exemple l'acide aminométhanephosphonique, l'acide aminométhanesulfonique, etc.), les aminodithiocarbamates (par exemple le bis(dithiocarbamate)diéthylènetriamine, le dithiocarbamatediamino-1,2-éthane, etc.), les aminoamidoximes, les azamacrocycles (par exemple le cyclam, etc.), les aza-éthers-couronnes (par exemple les Kryptofix (marque déposée de Merck Darmstadt (RFA)), etc.) etc, et les combinaisons de ces ligands entre eux.

Le ligand doit être lié au polymère à l'aide d'un agent de couplage. L'agent de couplage sert à activer un des réactifs qui réagit alors sur les autres molécules. La nature de l'agent de couplage est très diverse.

Néanmoins il doit satisfaire à quelques conditions: il doit pouvoir créer au moins deux liaisons (à partager entre le ligand l'atome actif de la résine), il ne doit pas réagir plusieurs fois sur le même ligand ni se dégrader en cours de réaction, etc.. En revanche il peut contenir deux ou plusieurs atomes activés. En général les liaisons se créent entre deux atomes réactifs qui sont typiquement des hétéroatomes comme l'azote, l'oxygène, le soufre, le phosphore, le silicium, etc., et de préférence l'azote, l'oxygène et le soufre Typiquement l'agent de couplage est un aldéhyde aliphatique (par exemple le formaldéhyde ou ses dérivés et précurseurs, l'acétaldéhyde, le propionaldéhyde, le glyoxal, etc.) aromatiques (par exemple le benzaldéhyde, le salicylaldéhyde, etc.) ou hétérocyclique (par exemple le furfural, les dérivés du formaldéhyde comme le paraformaldéhyde, l'hexaméthylènetétramine, les polymères de l'acétaldéhyde, etc.) et les autres tels les mélanges d'aldéhydes, les précurseurs d'aldéhydes comme les précurseurs complexes du formaldéhyde ou de l'acétaldéhyde. Si l'aldéhyde utilisé est le formaldéhyde la liaison obtenue est un pont méthylène (-CH₂-). La nature de l'agent de couplage détermine les propriétés chélatantes du ligand greffé.

La réaction de couplage se déroule dans une solution aqueuse acide, dans laquelle l'agent de compétition et l'agent de couplage sont solubles.

Pour éviter la multifonctionnalisation du ligand un composé susceptible de réagir avec l'agent de couplage est ajouté. Cet agent de compétition peut être introduit à n'importe quelle étape de la préparation. Sa proportion varie selon les conditions réactionnelles.

La quantité de cet agent dépend de l'excès d'agent de couplage par rapport au ligand et au degré de substitution désiré. Typiquement elle se situe dans un rapport ligand-agent de compétition-agent de couplage 1:1:2 à 1:10:11 selon que le ligand est une polyamine possédant de 3 à environ 100 unités éthylèneimines.

Cet agent de competition doit pouvoir réagir avec l'agent de couplage, éventuellement avec le ligand mais pas avec le polymère. Les bons agents de compétition sont ceux qui sont constitués des mêmes unités que le polymère parce que d'une part ils ne peuvent pas réagir directement avec le ligand et que d'autre part leur vitesse de réaction avec l'agent de couplage est du même ordre de grandeur que celle du ligand. Ainsi les bons agents de compétition sont les amides solubles dans les solutions aqueuses acides comme l'urée, le formamide, l'acétamide, l'acrylamide, le méthacrylamide, etc. On peut cependant trouver des agents de compétition dans d'autres classes de composés, notamment les composés organiques possédant un hydrogène actif associé à un ion métallique (par exemple les sels cupriques en présence de nitrométhane, de nitroéthane, etc., l'acide malonique, etc.), les composés permettant la réduction du formaldéhyde lorsque celui-ci est l'agent de couplage, comme l'acide formique, etc., ou d'autres tels le phénol ou les autres composés phénoliques, etc.

Le temps de réaction est généralement compris entre 0,2 heure et 48 heures, mais plus souvent entre 2 heures (temps nécessaire à la dissolution du paraformaldéhyde à pH 10 par exemple) et 24 heures. La température de la solution est maintenue entre la température ambiante et la température d'ébullition du solvant le plus volatil; généralement les réactions de couplage sont effectuées dans l'eau pure (dans ce cas la température de la solution est au maximum de 100^{o}C). Les réactions de couplage sont effectuées de préférence entre 15^{o}C et 80^{o}C. Lorsqu'on opère à chaud, on prend soin de maintenir constant le volume de la solution.

La capacité des polymères ou des résines dépend du taux de réticulation, de la proportion d'unités modifiables ( de type formule I par exemple), etc.. Pour des gels de polyacrylamide la capacité typique est comprise entre 0,01 et 4,5 moles de ligand greffé par kilogramme de résine sèche. Elle se situe cependant plus souvent entre 0,1 et 2 moles de ligand par kilogramme de résine sèche.

Les résines chélatantes hydrophiles préparées selon la présente invention sont capables, lorsqu'elles sont mises au contact de solutions aqueuses ou de mélanges de solvants contenant un ou plusieurs ions métalliques, de former des complexes métalliques. La température des solutions peut varier de 5^{o}C à 100^{o}C; elle est plus généralement comprise entre 15^{o}C et 85^{o}C. On procède soit en introduisant la résine chélatante dans une colonne et en laissant la solution renfermant les ions métalliques s'écouler au travers, soit en plaçant d'abord la résine dans un récipient, puis en versant la solution des ions métalliques par-dessus, et enfin en filtrant et en rinçant la résine avec de l'eau par exemple.

En général les méthodes dynamiques (colonnes) donnent de meilleurs résultats que les méthodes statiques (lits), elles sont donc utilisées lorsque cela est possible.

Le temps pendant lequel la résine et la solution doivent être en contact est variable et dépend de facteurs aussi divers que la quantité de résine et d'ions métalliques, que la vitesse à laquelle la solution s'écoule dans la colonne (en système dynamique), etc..Des temps de contact de 1 minute à 50 heures sont typiques bien qu'il suffise la plupart du temps de mettre en contact la résine et la solution pendant 0,1 heure à 5 heures.

La sélectivité des résines préparées selon la présente invention dépend de la nature des ions métalliques et du ligand greffé sur la résine.Lorsque deux ions métalliques sont capables de former un chélate avec le ligand il faut considérer différents facteurs pour connaître la sélectivité de la résine: le pH de la solution, la concentration des ions métalliques, les constantes de formation des complexes pour chacun des ions métalliques, la cinétique d'échange des complexes, etc.. Le dernier effet mentionné signifie que si un ion métallique forme avec le ligand, un chélate inerte , celui-ci se formera préférentiellement aux autres complexes, parce qu'un complexe inerte ne peut pas être détruit par un complexe labile. Une polyamine par exmple forme avec le nickel un complexe labile et avec le chrome un complexe inerte. Le chrome aura donc la préférence sur le nickel dans la réaction de chélation. La formation des chélates métalliques dépend en général du pH; les complexes les plus stables seront ceux qui se forment de préférence dans le domaine de pH considéré même si, en valeur absolue, d' autres ions métalliques peuvent former des complexes plus stables.Ainsi le cuivre(II) et le fer(III) forment tous deux des complexes extrêmement stables avec les composés phénoliques; le fer(III) pourtant forme un chélate avec ces ligands en milieu acide déjà, alors que la chélation du cuivre(II) ne commence qu'en milieu neutre. La sélectivité de la résine est donc modifiée lorsque le pH varie. Enfin la sélectivité peut être modifiée en variant les concentrations des ions métalliques. Le cuivre(II) par exemple forme des complexes aminés beaucoup plus stables que le nickel(II).

Cependant si la concentration du nickel est beaucoup plus grande que celle du cuivre, le nickel(II) sera capable de détruire les complexes de cuivre. D'autres exemples sont mentionnés dans l'introduction et dans les exemples.

Lorsque la résine est saturée, c'est-à-dire que tous les ligands sont chélatés par les ions métalliques ou que la concentration en ions métalliques dans l'éluat devient trop importante, il est nécessaire de régénérer la résine chélatante. Pour ce faire il existe plusieurs méthodes.

La première méthode consiste à modifier le pH de la résine, en le ramenant dans un domaine où la coordination des ions métalliques n'est pas possible. En-dessous de pH 5-6 les ions métalliques ne peuvent plus chélater les polyamines par exemple. Celles-ci en effet se trouvent sous forme d'ions amoniums incapables de chélation. Une résine saturée en ions métalliques (par exemple le nickel(II), le cuivre(II), le cobalt(II), etc.) peut donc être régénérée en amenant le pH de la résine en milieu acide. Les ions métalliques repassent dans la solution et la résine, après neutralisation avec une base, est à nouveau prête à être utilisée.

Une deuxième façon de procéder consiste à mettre en contact la résine en présence d'un ligand chélatant plus puissant que celui lié à la résine. L'ion cyanure par exemple forme avec la plupart des ions métalliques des complexes extrêmement stables. En fait ils sont si stables que pratiquement aucun autre ligand peut détruire un complexe métallique cyanuré.

Ainsi une résine de type polyamine saturée en ions métalliques peut être régénérée par un simple lavage avec une solution (de pH basique) contenant l'ion cyanure. Après un simple lavage à l'eau, la résine est à nouveau prête à l'utilisation.

Une troisième manière de faire consiste à changer le degré d'oxydation de l'ion métallique pour le rendre inapte à la chélation.

Les exemples suivants servent à illustrer quelques possibilités des résines préparées selon la présente invention. Ils ne sont en aucun cas limitatifs puisque la matière présentée ici n'est que l'illustration d'une méthode généralement applicable.

### EXEMPLE 1

10 grammes de gel sont préparés comme dans le brevet français A-2 354 351. Ils sont suspendus dans 50 ml d'eau, mélangés avec 5,3 grammes d'acide iminodiacétique et avec 3,2 grammes de soude caustique dissous dans 150 ml d'eau. On agite la suspension et rajoute 12 grammes de paraformaldéhyde. Après 4 heures d'agitation à température ambiante on filtre la résine, lave successivement à l'eau, à l'alcool et à l'acétone. La résine obtenue a une capacité en cuivre de 0,6 méq/g de résine sèche.

### EXEMPLE 2

30 grammes de polyacrylamide préparés comme dans l'exemple 1 sont suspendus dans 300 ml d'eau. 8 grammes de chlorhydrate d'éthylènediamine dissous dans 50 ml d'eau, 5 ml de formol 37% et 1.2 g d'urée sont rajoutés à cette suspension et le tout est agité pendant 20 heures à température ambiante. On traite les billes de résine comme dans l'exemple 1. La capacité de la résine obtenue est de 0,5 mmole par gramme de résine sèche (par rapport au cuivre).

### EXEMPLE 3

On prépare 30 g de résine avec 21 grammes de chlorhydrate de cyclam, 20 ml de formol 37% et 8,4 g d'urée comme dans l'exemple 1. La capacité de la résine obtenue est de 0,5 mmole par gramme de résine sèche (par rapport au cuivre).

### EXEMPLE 4

On procède comme dans l'exemple 1 mais avec 30 grammes de résine, 22 gammes de chlorhydrate de tétraéthylènepentamine, 25 ml de formol 37% et 18 g d'acrylamide. La résine obtenue a une capacité de 0,5 mmole par gramme de résine sèche (par rapport au cuivre).

### EXEMPLE 5

20 litres d'une solution contenant 100 mg/l de rhodium, 40 mg/l de nickel, 33 mg/l de cuivre, 5 g/l de sodium et 300 mg/l de calcium sont élués à travers une colonne préparée avec 100 grammes de résine comme celle préparée dans l'exemple 4. La colonne est d'abord rincée à l'eau, puis à l'acide chlorhydrique dilué. Les deux lavages éliminent respectivement le sodium et le calcium, puis le nickel et le cuivre. La résine est sortie de la colonne puis elle est brûlée. On récupère 1,9 grammes de rhodium sous forme de cendres grises exemptes d'impuretés. aaa

### EXEMPLE 6

10 ml d'une solution contenant 5,4 mg/l de cadmium, 2 mg/l de chrome (III), 4,04 mg/l de cuivre, 8 mg/l de mercure(II), 2,9 mg/l de nickel, 7,2 mg/l de plomb et 4,2 mg/l de zinc sont élués à travers une colonne remplie par 100 grammes de résine préparée conformément à celle de l'exemple 4. Après élution de la solution, la résine est rincée avec 10 ml d'eau et l'éluat analysé. On décèle encore 0,01 mg/l de cadmium, 0,07 mg/l de chrome(III), 0,02 mg/l de cuivre, 0,0018 mg/l de mercure(II), 0,03 mg/l de nickel, 0,03 mg/l de plomb et 0,02 mg/l de zinc. La résine est régénérée par un lavage avec HNO₃, un rinçage à l'eau, une neutralisation avec NaOH 2M, un lavage à l'eau jusqu'à neutralité. La résine est alors prête à être réutilisée.

### EXEMPLE 7

Une solution d'acide chlorhydrique décimolaire contenant respectivement 10 milligrammes/litre de platine, de palladium et de rhodium, ainsi que 10 grammes/litre de cuivre est éluée sur une colonne contenant 20 grammes de résine préparée à l'exemple 4. Lorsque la saturation de la résine est obtenue on constate que tout le rhodium et le cuivre sont élués. Une partie du platine est retenue. La composition sur la résine est environ 75% de palladium et 25% platine. L'élution avec de l'acide chlorhydrique 6 molaire (3 volumes de résine) permet de ressortir sélectivement le palladium (le platine reste fixé sur la résine) avec un taux d'élution de 95% environ.

Le rhodium peut être séparé du cuivre comme précedemment décrit dans l'exemple 5.

## Revendications

1. Procédé pour la préparation de résines polymères hydrophiles fonctonnalisées par des ligands par réaction d'une résine de polyacrylamide réticulée comprenant des unités de formule: 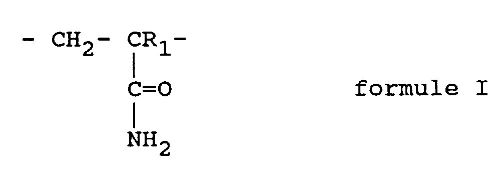 dans laquelle R₁ est hydrogène ou un reste aliphatique, avec un ligand chélatant du groupe comprenant un acide aminé, une polyamine, un aminoalcool, un aminothiol, un acide aminophosphonique ou sulfonique, un aminodithiocarbamate, une aminoamidoxim, un azamacrocycle et une aza-ether couronne en présence d'un agent de couplage, caractérisé en ce que l'on conduit la réaction dans une solution aqueuse acide en présence d'un agent de compétition qui est capable de réagir avec l'agent de couplage environ à la même vitesse que le groupe amido de la résine avec l'agent de couplage, pour limiter statistiquement la réaction de l'agent de couplage avec la résine, et en ce que l'agent de couplage réagit aussi bien avec le ligand chélatant qu'avec l'agent de compétition et en ce que cet agent de compétition ne réagit pas avec la résine.

2. Procédé selon la revendication 1, caractérisé en ce que R₁ est hydrogène, alkyle ou aryle.

3. Procédé selon la revendication 1, caractérisé en ce que la réaction est conduite dans l'eau pure, le temps de réaction étant de 2 min à 24 h et la température ne dépassant pas 100 °C.

4. Procédé selon l'une des revendictions 1 à 3 caractérisé en ce que le rapport ligand : agent de compétition est de 1 : 1 à 1 : 10.

5. Procédé selon l'une des revendications 1 à 4, caractérisé en ce que l'agent de compétition est un amide soluble dans une solution aqueuse, un composé organique possédant un atome d'hydrogène actif associé à un ion métallique, notamment l'urée, le formamide, l'acétamide, l'acrylamide, le méthacrylamide ou un sel cuprique en présence de nitrométhane ou de nitroéthane, ou l'acide malonique.

6. Procédé selon l'une des revendications 1 à 5, caractérisé en ce que l'agent de couplage est un aldéhyde aliphatique, aromatique ou hétérocyclique, par exemple le formaldéhyde.

7. Procédé selon la revendication 1, caractérisé en ce que pour 10 grammes de polyacrylamide, on utilise entre 10 et 50 millilitres de solution aqueuse de chlorhydrate de tétraéthylènepentamine 3,7 %, 7,5 à 15 ml de formol 36 % dans l'eau comme agent de couplage et à 18 grammes d'acrylamide comme agent de compétition.

8. Résines polymères hydrophiles fonctionnalisées préparées selon l'une des revendications 1 à 7.

9. Procédé d'extraction sélective et quantitative d'ions métalliques dans les effluents et dans les eaux résiduaires industrielles ou naturelles, caractérisé en ce qu'on traite les eaux avec une résine selon la revendication 8.

10. Procédé selon la revendication 9, caractérisé en ce que les eaux sont mises en contact statique ou dynamique avec la résine fonctionnalisée.

11. Procédé pour récupérer le rhodium dans les effluents ou les eaux résiduaires industrielles et naturelles, caractérisé en ce qu'on traite les eaux avec une résine selon la revendication 8, en ce que la résine est éluée avec de l'eau et avec une solution aqueuse acide, et en ce que la résine est brûlée et le rhodium est obtenu sous forme de cendre.

## Claims

1. A method for the preparation of hydrophilic polymer resins functionalized by ligands by reaction of a cross-linked polyacrylamide resin which consists of units with formula: 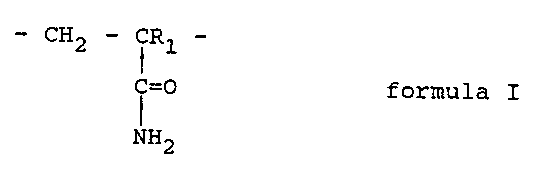 in which R1 is hydrogen or an aliphatic residue, with a chelating ligand of the group comprising an amino acid, a polyamine, an aminoalcohol, an aminothiol, an amino phosphonic acid or sulfonic acid, an amino dithiocarbamate, an aminoamidoxime, an azamacrocyclic and an aza-crown-ether in the presence of a coupling agent, characterized in that the reaction is conducted in the presence of a competitive agent in an aqueous acidic solution which is capable of reacting with the coupling agent at approximately the same rate as the amino group of the resin with the coupling agent, to achieve a statistical limitation of the reaction of the coupling agent with the resin and in that the coupling agent reacts just as well with the chelating ligand as with the competitive agent, and in that this competitive agent does not react with the resin.

2. A method according to claim 1, characterized in that R1 is hydrogen, an alkyl or aryl group.

3. Method according to claim 1, characterized in that the reaction is conducted in pure water, with a reaction time of 2 minutes to 24 hours and a temperature not exceeding 100°C.

4. A method according to one of the claims 1 - 3, characterized in that the ligand/competitive agent ratio is from 1:1 to 1:10.

5. A method according to one of the claims 1 to 4, characterized in that the competitive agent is a soluble amide,in an aqueous solution, an organic compound containing an active hydrogen atom associated with a metal ion, particularly urea, formamide, acetamide, acrylamide, methacrylamide, or a cupric salt in the presence of nitromethane or nitroethane, or malonic acid.

6. A method according to one of the claims 1 to 5, characterized in that the coupling agent is an aliphatic, aromatic or heterocyclic aldehyde, for example formaldehyde.

7. A method according to claim 1, characterized in that for 10 g of polyacrylamide one uses between 10 and 50 ml of a 3.7% aqueuos solution of tetraethylenepentamine hydrochloride, 7.5 to 15 ml of 36% formalin in water as coupling agent, and up to 18 g of acrylamide, as competitive agent.

8. Hydrophilic polymer resins with functional groups prepared according to one of the claims 1 to 7.

9. A method for the selective and quantitative extraction of metal ions from effluents and from industrial or natural residual waters, characterized in that the waters are treated with a resin according to claim 8.

10. A method according to claim 12, characterized in that the waters are brought in static or dynamic contact with the resin with functional groups.

11. A method for the recovery of rhodium in effluents or in industrial and natural residual waters, characterized in that one treats the waters with a resin according to claim 11, in that the resin is eluted with water and with an acidic aqueous solution, and in that the resin is incinerated and the rhodium is obtained in the form of ashes.

## Patentansprüche

1. Verfahren zur Herstellung von hydrophilen durch liganden-funktionalisierte Polymerharze, durch Umsetzen eines vernetzten Polyacrylamidharzes, welches Einheiten der Formel: 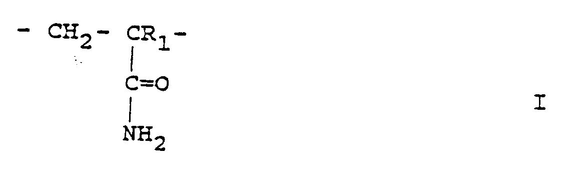 worin R₁ Wasserstoff oder ein aliphatischer Rest ist, mit einem chelatbildenden Ligand aus der Gruppe umfassend eine Aminosäure, ein Polyamin, ein Aminoalkohol, ein Aminothiol, eine Aminophosphon- oder Sulfonsäure, ein Aminodithiocarbonat, ein Aminoamidoxin, ein Azamacrocyclus und einem Azakronenether, in Gegenwart eines Kupplungsmittels, dadurch gekennzeichnet, dass man die Reaktion in einer sauren wässrigen Lösung in Gegenwart eines kompetitiven Agens durchführt, welches fähig ist, mit dem Kupplungsmittel in ungefähr der gleichen Geschwindigkeit wie die Amidogruppe des Harzes mit dem Kupplungsmittel zu reagieren, um die Umsetzung des Kupplungsmittels mit dem Harz statistisch zu begrenzen, und dass das Kupplungsmittel gleich gut mit dem Chealtbildner reagiert wie mit dem kompetitiven Agens und dass dieses kompetitive Agens nicht mit dem Harz reagiert.

2. Verfahren gemäss Anspruch 1, dadurch gekennzeichnet, dass R₁ Wasserstoff, Alkyl oder Aryl ist.

3. Verfahren nach Anspruch 1, dadurch gekennzeichnet, dass die Reaktion in reinem Wasser durchgeführt wird, wobei die Reaktionstemperatur 2 Min. bis 24 Stunden beträgt und die Temperatur 100°C nicht überschreitet.

4. Verfahren nach einem der Ansprüche 1 bis 3, dadurch gekennzeichnet, dass das Verhältnis Ligand : zu kompetitivem Agens 1 : 1 bis 1 : 10 ist.

5. Verfahren nach einem der Ansprüche 1 bis 4, dadurch gekennzeichnet, dass das kompetitive Agens ein Amid ist, welches in einer wässrigen Lösung löslich ist, eine organische Verbindung, welche ein aktives Wasserstoffatom aufweist und mit einem Metallion assoziert ist, insbesondere Harnstoff, Formaldehy, Acetamid, Acrylamid, Methacrylamid oder ein Kupfersalz in Gegenwart von Nitromethan oder Nitroethan oder Malonsäure ist.

6. Verfahren nach einem der Ansprüche 1 bis 5, dadurch gekennzeichnet, dass das Kupplungsmittel ein aliphatischer, aromatischer oder heterocyclischer Aldehyd, z.B. Formaldehyd ist.

7. Verfahren nach Anspruch 1, dadurch gekennzeichnet, dass man für 10 g Polyacrylamid zwischen 10 und 50 ml einer 3,7%igen wässrigen Lösung von Tetraethylenpentaminhydrochlorid, 7,5 bis 15 ml 36%iges Formalin in Wasser als Kupplungsmittel und 18g Acrylamid als kompetitives Agens verwendet.

8. Funktionalisierte hydrophile Polymerharze, hergestellt nach einem der Ansprüche 1 bis 7.

9. Verfahren zur selektiven und quantitativen Extraktion von Metallionen in industriellen oder natürlichen Wässern und Abwässern, dadurch gekennzeichnet, dass man die Wässer mit einem Harz gemäss Anspruch 8 behandelt.

10. Verfahren nach Anspruch 9, dadurch gekennzeichnet, dass die Wässer statistisch oder dynamisch mit dem funktionalisierten Harz in Kontakt gebracht werden.

11. Verfahren zur Gewinnung von Rhodium in industriellen und natürlichen Wässern oder Abwässern` dadurch gekennzeichnet, dass man die Wässer mit einem Harz gemäss Anspruch 8 behandelt, dass das Harz mit Wasser und einer sauren wässrigen Lösung eluiert wird und dass das Harz verbrannt wird und das Rhodium in Form von Asche gewonnen wird.
